# EUROPEAN PATENT APPLICATION

(11) **EP 4 814 303 A1**
(43) Date of publication of application: **30.09.2026**
(21) Application number: 25166890.1
(22) Date of filing: 28.03.2025
(51) Int. Cl.: F03D 17/00

(54) **A METHOD FOR COLLECTING ANALYSIS DATA FROM A WIND TURBINE**

(71) Applicant: VESTAS WIND SYSTEMS A/S, 8200 Aarhus N (DK)
(72) Inventor: THORSEN, Morten Tim, 8381 Tilst (DK); SCHMIDT, Jesper, 8250 Egå (DK)
(74) Representative: Vestas Patents Department

(57) **Abstract**

A method for collecting analysis data from at least one wind turbine (2) is disclosed. A baseline (9) representing normal behaviour of the at least one wind turbine (2), including patterns for switching between operating states of the at least one wind turbine (2), is established. During operation of the at least one wind turbine (2), operating data is collected from the at least one wind turbine (2), the operating data including data related to operating states of the at least one wind turbine (2). The collected operating data is compared to the patterns for switching between operating states defined by the baseline (9), and in the case that the collected operating data for one of the at least one wind turbines (2) deviates from the patterns for switching between operating states defined by the baseline (9) by at least a threshold amount, a campaign for collecting analysis data from at least that wind turbine (2) is initiated.

## Description

### FIELD OF THE INVENTION

The present invention relates to a method for collecting analysis data from at least one wind turbine, in particular with the purpose of performing root cause analysis. The method according to the invention ensures that sufficient and relevant analysis data is collected if the behaviour of the at least one wind turbine deviates from expected behaviour.

### BACKGROUND OF THE INVENTION

When errors, damage of components, etc., occur during operation of wind turbines, a root cause analysis is normally performed in order to establish what caused the error or damage. In order to be able to perform a thorough and accurate root cause analysis, it is necessary to collect a sufficient amount of relevant analysis data from the wind turbine. However, once errors, damage of one or more components or similar events have already occurred, it is too late to collect analysis data that might be useful for determining what caused the event. It is therefore necessary to collect such analysis data before an event occurs, and possibly also to collect analysis data from wind turbines that may not experience such events. Analysis data required in order to perform a root cause analysis is so extensive that simply collecting it from all wind turbines at all times is not an option.

Accordingly, it is desirable to be able to predict which wind turbines are likely to experience a certain kind of event as specified above, so that a campaign for collecting analysis data can be initiated in advance. Previously, this has been obtained by defining, for a number of specific events, certain behaviour of the wind turbine that indicates that the wind turbine is likely to experience that specific event in the near future. One disadvantage of this approach is that only a certain group of events can be predicted in this manner. Another disadvantage is that a given event will have to occur at least once in at least one wind turbine in order to define the behaviour that will trigger the initiation of a campaign for collecting analysis data.

### DESCRIPTION OF THE INVENTION

It is an object of embodiments of the invention to provide a method for collecting analysis data from at least one wind turbine, in which timely collection of analysis data being relevant with regard to any error event is ensured.

It is a further object of embodiments of the invention to provide a method for collecting analysis data from at least one wind turbine, in which collection of analysis data is ensured without requiring that a given error event has occurred previously.

The invention provides a method for collecting analysis data from at least one wind turbine, the method comprising the steps of:
- establishing a baseline representing normal behaviour of the at least one wind turbine, the baseline including patterns for switching between operating states of the at least one wind turbine,
- during operation of the at least one wind turbine, collecting operating data from the at least one wind turbine, the operating data including data related to operating states of the at least one wind turbine,
- comparing the collected operating data to the patterns for switching between operating states defined by the baseline, and
- in the case that the collected operating data for one of the at least one wind turbines deviates from the patterns for switching between operating states defined by the baseline by at least a threshold amount, initiating a campaign for collecting analysis data from at least that wind turbine.

Thus, in the method according to the invention, a baseline is initially established. The baseline represents normal behaviour of the at least one wind turbine, in the sense that it reflects how the wind turbine will normally operate and react during realistic operating conditions at the location of the wind turbine.

The established baseline moreover includes patterns for switching between operating states of the at least one wind turbine. In the present context the term 'switching between operating states' should be interpreted to mean that the wind turbine switches from operating or being in one state to operating or being in another state, e.g. including switching between operating modes, such as normal mode, derated or curtailed mode, overrated mode, protective mode, etc., changing a setting, such as a pitch setting, a yaw setting, etc., activation and/or deactivation of auxiliary systems, such as cooling systems, heating systems, etc., initiation of protective measures, e.g. in response to a sensor reading exceeding a threshold value, and/or any other suitable kind of switching between operating states.

In the present context the term 'patterns for switching between operating states' should be interpreted to mean patterns regarding how the wind turbine switches between operating states as described above, e.g. including switching frequency, correlated switching in various kinds of operating states, etc. Accordingly, the baseline reflects how the wind turbine is expected to behave under normal conditions, and with no errors on the wind turbine, at least with respect to how it switches between operating states.

During operation of the at least one wind turbine, operating data is collected from the at least one wind turbine. The collected operating data includes data related to the operating states of the at least one wind turbine, and thus also provide information regarding when and how the at least one wind turbine switches between operating states. In one embodiment, the collected operating data may simply be data related to operating states of the at least one wind turbine, even though it is not ruled out that other kinds of relevant data are collected in addition thereto. The operating data may, e.g., be sampled on a time scale of minutes, such as 10 minutes data.

The collected operating data could, e.g., include counts regarding how many times certain events occur, e.g. within a specified time window. Such events could, e.g., include yaw ccw, oil pump turned on, power consumption in drive, blade pitch frequency, exceeding pressure limits, exceeding temperature limits, exceeding reactive power limits or thresholds, exceeding voltage limits or thresholds, voltage drop, exceeding generator imbalance threshold, etc.

The collected operating data is compared to the patterns for switching between operating states defined by the baseline. This comparison will immediately reveal whether or not the at least one wind turbine behaves as expected and defined by the baseline, at least in terms of how and when the at least one wind turbine switches between operating states.

Thus, in the case that the collected operating data for one of the at least one wind turbine deviates from the patterns for switching between operating states defined by the baseline by at least a threshold amount, this is an indication that this wind turbine is not behaving as expected, and this may be a sign that some kind of error is likely to occur in the wind turbine in the near future. Therefore, when this is the case, a campaign for collecting analysis data from at least that wind turbine is initiated.

In the present context the term 'analysis data' should be interpreted to mean data originating from the wind turbine, and which may be relevant with regard to performing root cause analysis in the case that an error event occurs in the wind turbine. It may, e.g., be or form part of an extended debug log. The analysis data could, e.g., include high frequency data, such as data being sampled approximately at 1-10 kHz, such as at 100 Hz. For instance, the analysis data may 'raw' measured data from the wind turbine, such as data related to various relevant temperatures, wind speed, pitch angle, yaw angle, rotational speed of the rotor, loads, etc. Data sourced for the analysis data could, e.g., include the turbine control system, the converter control system, the power plant electrical control system and/or auxiliary devices, such as CMS condition monitoring.

Since the determination regarding initiating a campaign for collecting analysis data is based on a detected deviation from normally expected behaviour, rather than on detection of specific behaviour, indicating the risk of a specific error event, it is ensured that the risk of any error event occurring is detected and acted upon, even if such an error has not previously occurred in any of the wind turbines. Thus, regardless of the type of error event, it is ensured that a campaign for collecting analysis data is timely initiated, so that analysis data is available for root cause analysis if the error event eventually occurs. Moreover, it is avoided that analysis data is collected if the at least one wind turbine is in fact operating normally and as expected, thus minimising the amount of analysis data that needs to be stored, while ensuring that relevant analysis data is available.

In the case that the step of comparing the collected operating data to the patterns for switching between operating states defined by the baseline reveals deviating behaviour of a specific part of the wind turbine, the step of initiating a campaign for collecting analysis data may comprise initiating a campaign for collecting analysis data related to that specific part of the wind turbine.

According to this embodiment, detected deviations regarding the switching patterns may relate to a specific part or a specific component of the wind turbine, e.g. to the blades, the gearbox, the transformer, etc. In this case it is most likely that an error event will occur in this part or component, rather than in any other part or component of the wind turbine. Therefore, when this occurs, the campaign for collecting analysis data may be focused on data related to that specific part or component, thus minimising the amount of collected analysis data while ensuring that relevant analysis data is available to an even further extent. For instance, the collected analysis data may, in this case, include data related to temperatures, loads, etc., at or near the part or component in question. The analysis data may be data that is normally collected and used during operation of the wind turbine, but normally not stored, since this would result in vast amounts of stored data.

The patterns for switching between operating states may include patterns related to a frequency of occurrence of one or more events that trigger switching in operating state of the wind turbine.

A switch in operating state of a wind turbine may be occasioned or triggered by certain events, such as at least one sensor reading exceeding a threshold value. For instance, a temperature sensor may detect that the temperature in a certain part of the wind turbine, e.g. a specific component, inside the nacelle, a cooling fluid, a lubricant, etc., has exceeded a threshold temperature value, and this may trigger that protective measures in order to reduce the temperature in question are initiated. Alternatively or additionally, one or more sensor readings may indicate that the loads on a specific part or component of the wind turbine have exceeded a certain threshold level, and this may trigger that the operation of the wind turbine is switched to a less aggressive mode.

Such switches in operating state are considered normal behaviour of the wind turbine, and it is regarded as being within the capability of the wind turbine to handle such events by performing the relevant switch in operating state. However, if the occurrence of triggering events and the associated switch in operating state becomes more frequent, this may be an indication that the wind turbine is deviating from its normal behaviour. For instance, if a temperature threshold is normally exceeded once a week or once a month, and a behaviour is detected where the temperature threshold is exceeded once every hour, this constitutes a deviation from normal behaviour. Accordingly, even though the wind turbine is capable of handling the individual event of exceeding the temperature threshold, and this therefore will not in itself trigger an alarm, the deviating behaviour is an indication that something may be wrong, and it is therefore relevant to initiate a campaign for collecting analysis data. Thus, the frequency of occurrence of one or more events that trigger switching in operating state of the wind turbine is a relevant kind of pattern to observe when deciding whether or not the behaviour of the wind turbine deviates from normal or expected behaviour.

Alternatively or additionally, the patterns for switching between operating states may include patterns related to operating commands of the wind turbine. The operating commands could, e.g., include pitch control commands, yaw control commands, control commands for cooling or heating systems, etc. In this case a switch in operating state may, e.g., be or include a change in pitch angle or yaw angle, or for switching on or off a cooling or heating system. For instance, in the case that a deviation from normal or expected behaviour with regard to how the pitch system is activated is detected, this may be an indication that something may be wrong, and that it is therefore relevant to initiate a campaign for collecting analysis data. Similar considerations apply to other relevant types of operating commands.

Alternatively or additionally, the patterns for switching between operating states may include patterns related to switching between operating modes of the wind turbine. The operating modes could, e.g., include normal operating mode, derated or curtailed operating mode, overboost mode, protective mode, etc. It is considered normal behaviour and within the capability of the wind turbine to appropriately switch between such operating modes. However, if the manner in which the wind turbine switches between operating modes starts to deviate from normal or expected behaviour of the wind turbine, e.g. if switching to protective mode starts to occur more frequently, then this may be an indication that something may be wrong, and that it is therefore relevant to initiate a campaign for collecting analysis data.

The step of collecting operating data from the at least one wind turbine may comprise counting the number of times at least one sensor reading exceeds a threshold value, and the step of comparing the collected operating data to the patterns for switching between operating states defined by the baseline may comprise comparing the counted number of times to a normally expected frequency of the at least one sensor reading exceeding the threshold value.

According to this embodiment, the wind turbine comprises at least one counter which counts up every time a given relevant sensor detects a sensor reading exceeding a relevant threshold value. The at least one sensor could, e.g., include a temperature sensor, a load sensor, etc., as described above. As described above, exceeding a sensor reading threshold value may not be considered problematic per se, and it is within the capability of the wind turbine to handle isolated or temporary incidents of sensor readings exceeding threshold values. However, if this occurs repeatedly or frequently, there may be a risk of damage to the wind turbine, or this may be caused by an emerging fault or error in the wind turbine. Therefore, in the case that the output of the counter deviates from an expected frequency of a sensor reading exceeding the threshold value, it may be relevant to initiate a campaign for collecting analysis data.

The step of establishing a baseline representing normal behaviour of the at least one wind turbine may be based at least partly on design specifications for the at least one wind turbine. According to this embodiment, theoretical knowledge, in the form of design specifications for the at least one wind turbine, is applied when establishing the baseline. The design specifications could, e.g., include specifications regarding load tolerances, power curve, temperature specifications, etc. Applying such design specifications allows the baseline to be established fast and accurately.

Alternatively or additionally, the step of establishing a baseline representing normal behaviour of the at least one wind turbine may be based at least partly on empirically collected operating data. According to this embodiment, operating data is empirically collected from the at least one wind turbine exhibiting normal behaviour and during normal operation in order to establish the baseline. This ensures that the established baseline accurately reflects normal or expected behaviour of the wind turbine at the site where the wind turbine is positioned, and under operating conditions normally experienced by the wind turbine. This provides an accurate baseline for detecting if the behaviour of the wind turbine starts to deviate from normal or expected behaviour, regardless of the nature or the cause of the deviating behaviour.

The step of establishing a baseline representing normal behaviour of the at least one wind turbine may comprise applying a trained artificial intelligence (AI) model for defining threshold amounts being representative for deviating behaviour of the at least one wind turbine. Trained AI models are usually very suitable for recognising patterns in large data sets. It is therefore relevant and suitable to apply a trained AI model for defining or identifying the boundaries between what can be regarded as normal behaviour of the wind turbine and what should be regarded as deviating behaviour.

The step of initiating a campaign for collecting analysis data may further comprise initiating campaigns for collecting analysis data from one or more further wind turbines arranged in the vicinity of the wind turbine exhibiting deviating behaviour. According to this embodiment, in the case that it has been established that one of the at least one wind turbine exhibits deviating behaviour, a campaign for collecting analysis data is initiated, not only from that wind turbine, but also from one or more further wind turbines arranged in the vicinity of the deviating wind turbine, and which may therefore be expected to experience similar operating conditions. Thereby a larger amount of relevant analysis data is collected. Furthermore, analysis data collected from neighbouring wind turbines that do not exhibit deviating behaviour may serve as an additional comparison baseline for the analysis data collected from the wind turbine exhibiting deviating behaviour, since the analysis data was collected under similar operating conditions. This may be a help in a subsequent root cause analysis.

The method may further comprise the step of applying the collected analysis data in a root cause analysis. As described above, this is a relevant and appropriate application of the collected analysis data.

### BRIEF DESCRIPTION OF THE DRAWINGS

The invention will now be described in further detail with reference to the accompanying drawings in which
Fig. 1 illustrates a wind farm with wind turbines in which a method according to an embodiment of the invention is applied,
Fig. 2 is a block diagram illustrating a method according to an embodiment of the invention, and
Fig. 3 is a flow chart illustrating a method according to an embodiment of the invention.

### DETAILED DESCRIPTION OF THE DRAWINGS

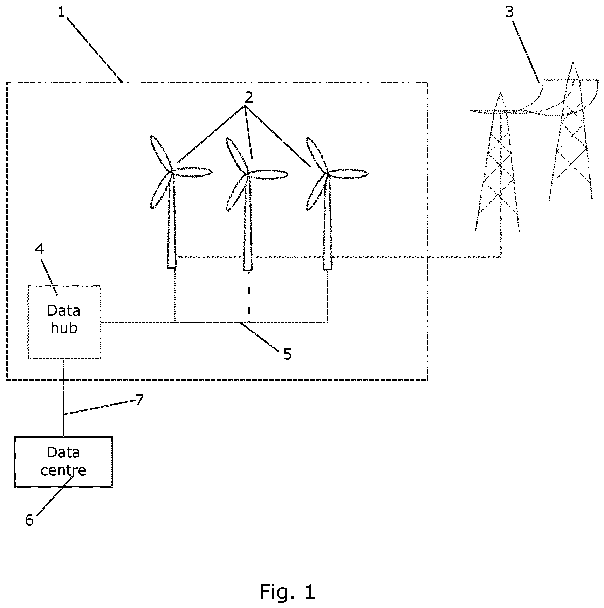

Fig. 1 shows a wind farm 1 comprising a plurality of wind turbines 2, three of which are shown. The wind turbines 2 are connected to a power grid 3, i.e. power produced by the wind turbines 2 is supplied to the power grid 3.

The wind turbines 2 are further connected to a data hub 4 via a communication line 5. Data collected by the wind turbines 2 can thereby be provided to the data hub 4. The wind turbines 2 of the wind farm 1 may be operated in the following manner.

A baseline representing normal behaviour of the wind turbines 2 is established. The baseline includes patterns for switching between operating states of the wind turbines 2, and it may be established at least partly based on design specifications for the wind turbines 2 and/or at least partly based on empirical data obtained from the wind turbines 2.

During operation of the wind turbines 2, operating data is collected from the wind turbines 2, including data related to operating states of the wind turbines 2, and the collected operating data is compared to the established baseline. In particular, the collected operating data related to operating states of the wind turbines 2 is compared to the patterns for switching between operating states defined by the baseline. This may, e.g., take place at the data hub 4 or at the respective wind turbines 2.

In the case that the comparison reveals that the behaviour of one of the wind turbines 2 deviates from the normal and expected behaviour defined by the baseline, this is regarded as an indication that an error event is likely to occur in the near future. Therefore, when this happens, a campaign for collecting analysis data from the wind turbine 2 exhibiting deviating behaviour is initiated, and the collected analysis data may be supplied to the data hub 4.

In the case that an error event subsequently occurs in the wind turbine 2 exhibiting deviating behaviour, the collected analysis data can be used for performing a root cause analysis. To this end, the collected analysis data may, e.g., be supplied to a central data centre 6 arranged outside the wind farm 1, via a data communication line 7.

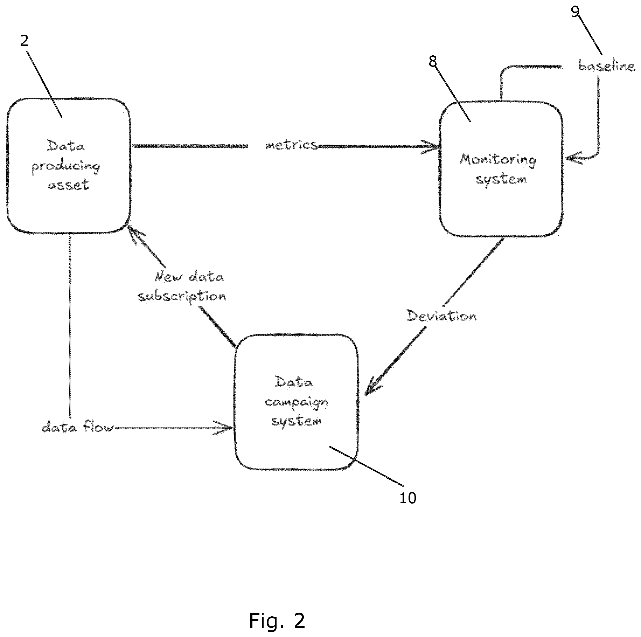

Fig. 2 is a block diagram illustrating a method according to an embodiment of the invention. During normal operation, a data producing asset 2, e.g. one of the wind turbines illustrated in Fig. 1 or a data producing device arranged in or forming part of one of a wind turbine, collects operating data including data related to operating states of the data producing asset 2, and supplies the operating data to a monitoring system 8. The operating data could, e.g., be or include relevant metrics, such as functional metrics, related to the operation of the wind turbine. The monitoring system 8 compares the received operating data to a baseline 9 representing normal behaviour of the data producing asset 2, including normally expected patterns for switching between operating states.

In the case that the comparison reveals that the operating data collected by the data producing asset 2 deviates from the patterns for switching between operating states defined by the baseline 9 by at least a threshold amount, it is concluded that the data producing asset 2 is exhibiting behaviour that deviates from the normal and expected behaviour. This may be an indication that an error event is likely to occur at the data producing asset 2 in the near future. Accordingly, when such a deviation is detected, a data campaign system 10 is instructed to initiate a campaign for collecting analysis data from the data producing asset 2, in order to ensure that relevant and sufficient analysis data is available for performing a thorough root cause analysis if the expected error event actually occurs, e.g. by a new or updated data subscription for data from the data producing asset 2.

Accordingly, the data campaign system 10 instructs the data producing asset 2 to send collected analysis data, and the data producing asset 2 provides the collected analysis data to the data campaign system 10, by use of the illustrated dataflow.

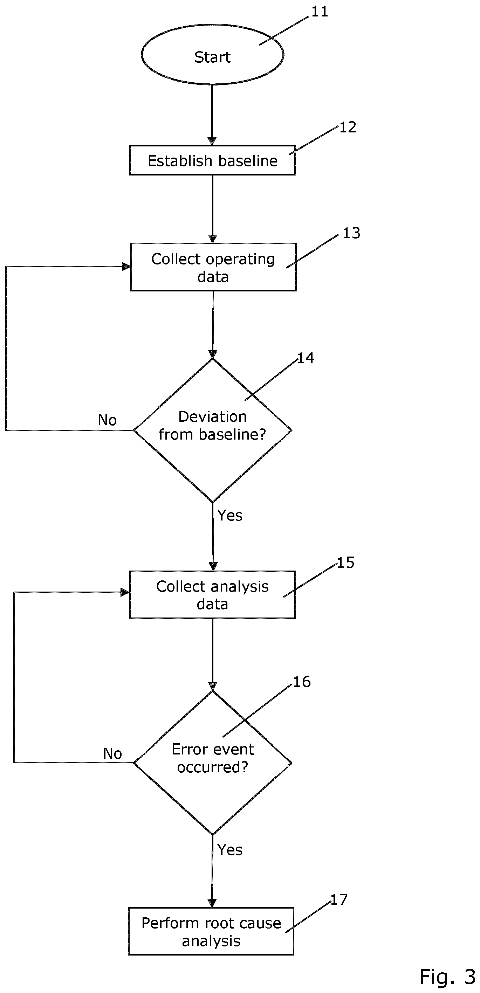

Fig. 3 is a flow chart illustrating a method according to an embodiment of the invention. The process is started at step 11. At step 12 a baseline representing normal behaviour of at least one wind turbine is established. The baseline includes patterns for switching between operating states of the at least one wind turbine.

At step 13 operating data is collected by the at least one wind turbine, during normal operation of the at least one wind turbine. The collected operating data includes data related to operating states of the at least one wind turbine, and thus also related to how the at least one wind turbine switches between relevant operating states.

At step 14 the collected operating data is compared to the established baseline, and it is investigated whether or not the collected operating data deviates from the baseline, in particular whether or not the data related to operating states deviates from the normal and expected patterns for switching between operating states defined by the baseline.

In the case that step 14 reveals that the collected operating data does not deviate from the baseline, it is concluded that the at least one wind turbine exhibits normal and expected behaviour, and the process is returned to step 13 for continued collection of operating data.

However, in the case that step 14 reveals that the collected operating data for one of the at least one wind turbine deviates from the patterns for switching between operating states defined by the baseline by at least a threshold amount, it is concluded that the wind turbine in question exhibits deviating behaviour, and this may be an indication that an error event is likely to occur in that wind turbine within the near future. The process is therefore forwarded to step 15 where a campaign for collecting analysis data from the wind turbine in question is initiated.

At step 16 it is investigated whether or not an error event has occurred in the wind turbine exhibiting deviating behaviour. If this is not the case, the process is returned to step 15 for continued collection of analysis data.

In the case that step 16 reveals that an error event has occurred, the process is forwarded to step 17, where a root cause analysis with regard to the occurred error event is performed, using the collected analysis data.

## Claims

1. A method for collecting analysis data from at least one wind turbine (2), the method comprising the steps of:
- establishing a baseline (9) representing normal behaviour of the at least one wind turbine (2), the baseline (9) including patterns for switching between operating states of the at least one wind turbine (2),
- during operation of the at least one wind turbine (2), collecting operating data from the at least one wind turbine (2), the operating data including data related to operating states of the at least one wind turbine (2),
- comparing the collected operating data to the patterns for switching between operating states defined by the baseline (9), and
- in the case that the collected operating data for one of the at least one wind turbines (2) deviates from the patterns for switching between operating states defined by the baseline (9) by at least a threshold amount, initiating a campaign for collecting analysis data from at least that wind turbine (2).

2. A method according to claim 1, wherein, in the case that the step of comparing the collected operating data to the patterns for switching between operating states defined by the baseline (9) reveals deviating behaviour of a specific part of the wind turbine (2), the step of initiating a campaign for collecting analysis data comprises initiating a campaign for collecting analysis data related to that specific part of the wind turbine (2).

3. A method according to claim 1 or 2, wherein the patterns for switching between operating states include patterns related to a frequency of occurrence of one or more events that trigger switching in operating state of the wind turbine (2).

4. A method according to any of the preceding claims, wherein the patterns for switching between operating states include patterns related to operating commands of the wind turbine (2).

5. A method according to any of the preceding claims, wherein the patterns for switching between operating states include patterns related to switching between operating modes of the wind turbine (2).

6. A method according to any of the preceding claims, wherein the step of collecting operating data from the at least one wind turbine (2) comprises counting the number of times at least one sensor reading exceeds a threshold value, and wherein the step of comparing the collected operating data to the patterns for switching between operating states defined by the baseline (9) comprises comparing the counted number of times to a normally expected frequency of the at least one sensor reading exceeding the threshold value.

7. A method according to any of the preceding claims, wherein the step of establishing a baseline (9) representing normal behaviour of the at least one wind turbine (2) is based at least partly on design specifications for the at least one wind turbine (2).

8. A method according to any of the preceding claims, wherein the step of establishing a baseline (9) representing normal behaviour of the at least one wind turbine (2) is based at least partly on empirically collected operating data.

9. A method according to any of the preceding claims, wherein the step of establishing a baseline (9) representing normal behaviour of the at least one wind turbine (2) comprises applying a trained artificial intelligence (AI) model for defining threshold amounts being representative for deviating behaviour of the at least one wind turbine (2).

10. A method according to any of the preceding claims, wherein the step of initiating a campaign for collecting analysis data further comprises initiating campaigns for collecting analysis data from one or more further wind turbines (2) arranged in the vicinity of the wind turbine (2) exhibiting deviating behaviour.

11. A method according to any of the preceding claims, further comprising the step of applying the collected analysis data in a root cause analysis.
